Europäisches Patentamt

European Patent Office

Office européen des brevets

(19)

(11) Veröffentlichungsnummer : **0 050 690 B1**

(12) **EUROPÄISCHE PATENTSCHRIFT**

(45) Veröffentlichungstag der Patentschrift :
26.09.84

(51) Int. Cl.³ : **F 24 D   5/02**, F 24 D 11/00

(21) Anmeldenummer : **80108054.0**

(22) Anmeldetag : **19.12.80**

(54) **Warmluft-Fernheizung.**

(30) Priorität : **28.10.80 CH 8007/80**

(43) Veröffentlichungstag der Anmeldung :
**05.05.82 Patentblatt 82/18**

(45) Bekanntmachung des Hinweises auf die Patenterteilung : **26.09.84 Patentblatt 84/39**

(84) Benannte Vertragsstaaten :
**DE NL SE**

(56) Entgegenhaltungen :
**DE-A-   12 998**
**DE-C-   571 577**
**DE-C-   881 257**
**DE-C-   895 055**

(73) Patentinhaber : **GEBRÜDER SULZER AKTIENGE-
SELLSCHAFT**
**Zürcherstrasse 9**
**CH-8401 Winterthur (CH)**

(72) Erfinder : **Brunner, Alfred**
**Wylandstrasse 21**
**CH-8400 Winterthur (CH)**

(74) Vertreter : **Dipl.-Ing. H. Marsch Dipl.-Ing. K. Sparing
Dipl.-Phys.**
**Dr. W.H. Röhl Patentanwälte**
**Rethelstrasse 123**
**D-4000 Düsseldorf (DE)**

**Beschreibung**

Die Erfindung betrifft eine Warmluftfernheizung nach dem Oberbegriff des Anspruchs 1.

Eine Warmluftfernheizung dieser Art ist aus der DE-C 895055 bekannt. Bei dieser Heizungsanlage wird die Luft in einem geschlossenen Kreislauf geführt, in dem zwischen dem Austrittsstutzen der Turbine und dem Eintrittsstutzen des Verdichters eine Reihe von Heizkörpern, ein Warmwasserbereiter und ein Vorkühler angeordnet sind. Sowohl in den verschiedenen Wärmeverbrauchern als auch in dem Vorkühler treten erhebliche Temperaturdifferenzen auf, die den Wirkungsgrad der Anlage beträchtlich herabsetzen. Ausserdem wirkt sich bezüglich der Turbinenleistung ungünstig aus, daß in den Wärmeverbrauchern sowie in der die Wärmeverbraucher mit dem Vorkühler verbindenden Rückleitung und im Vorkühler Druckverluste durch die im Kreislauf geführte Luft auftreten.

Der Erfindung liegt die Aufgabe zugrunde, eine Warmluftheizung der eingangs genannten Art so zu verbessern, dass sie einen erheblich höheren Wirkungsgrad, geringere Druckverluste sowie niedrigere Investitionskosten aufweist.

Diese Aufgabe wird erfindungsgemäss durch die Merkmale des Kennzeichens des Anspruchs 1 gelöst. Neben einem überraschend hohen Wirkungsgrad durch Ausnützung von Abfallwärme der Heisslufturbine ergibt sich auch eine merkliche Raumeinsparung durch den Wegfall der Wärmeverbraucher und des Vorkühlers.

Bei einer Warmluftfernheizung anderer Art als der nach dem Oberbegriff des Anspruchs 1 (DE-A-S 12 998 V/36c) liefert ein nicht von einer Heisslufturbine angetriebener Verdichter mit einem zur freien Atmosphäre offenen Luftansaugstutzen die komprimierte Luft über die Sekundärseite eines Rekuperators direkt dem zu heizenden Raum, wo sie offen austritt. Die Primärseite des Rekuperators liegt im Abgasstrom einer Gasturbine, die mit heissem Gas aus einer Brennkammer gespeist wird und die nicht den Verdichter für die Warmluft antreibt. Mit dieser Anlage lässt sich nicht die der Erfindung zugrunde liegende Aufgabe lösen.

Nach dem Kennzeichen von Anspruch 2 lassen sich auch Warmluftströme höherer Temperatur wirtschaftlich und ohne unkomfortable Temperaturdifferenzen in den beheizten Räumen nutzen.

Nach Anspruch 3 wird auch die Abluft von Räumen zur Verbesserung des Wirkungsgrades genutzt.

Das Kennzeichen von Anspruch 4 zeigt, wie mit geringem Aufwand Temperaturdifferenzen im Warmluftstrom vermieden werden können.

Durch die selektive Kühlung einzelner Warmluftveräste zu Gunsten anderer Aeste lässt sich die Effizienz der Anlage weiter verbessern.

Anspruch 6 zeigt eine einfache Anordnung zu einer dem Bedarf entsprechenden Beeinflussung der Wärmezufuhr.

Die Massnahmen nach Anspruch 7 gestatten die Feuchte der Abluft mit sehr geringem Aufwand zu beeinflussen.

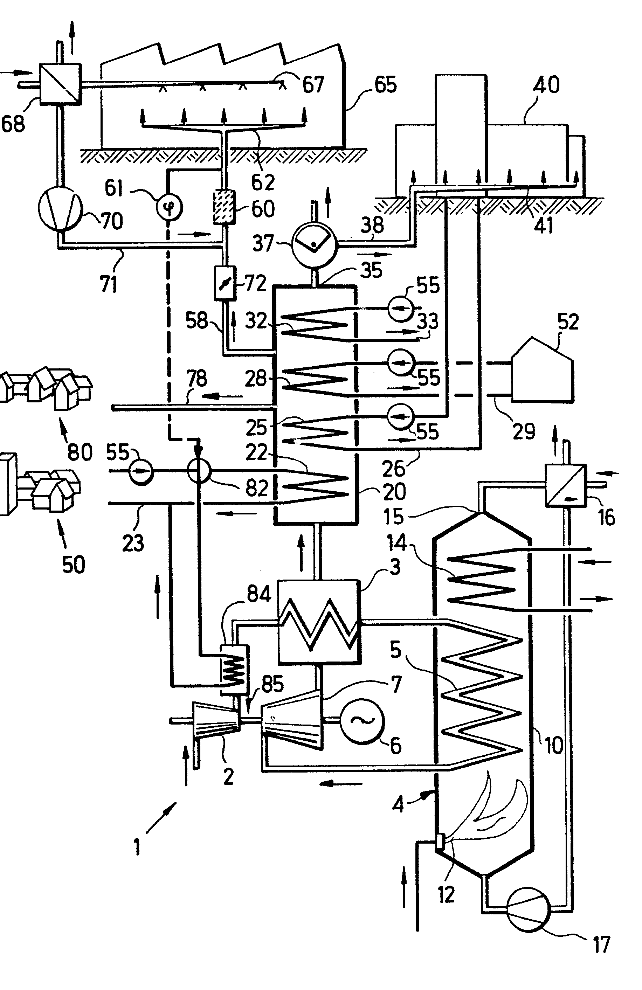

Die Erfindung wird nun an einem in der Zeichnung schematisch dargestellten Ausführungsbeispiel näher erläutert. Die Zeichnung zeigt eine Heisslufturbinengruppe 1 mit einem Verdichter 2, einem Rekuperator 3, einer in einem Heizapparat 4 untergebrachten Luftheizfläche 5 und einer mit dem Verdichter 2 und einem Generator 6 auf der selben Welle sitzenden Heisslufturbine 7.

Der Heizapparat 4 ist etwa nach Art eines Dampferzeugers ausgebildet. Er weist wassergekühlte, gasdichte Rohrwände 10 auf. Innerhalb des von den Wänden 10 umschlossenen Raumes sind unterhalb der Luftheizfläche 5 eine Feuerung 12 und oberhalb dieser Heizfläche 5 Dampferzeugerheizflächen 14 angeordnet, von denen hier nur eine gezeichnet ist. Am Austritt 15 des Heizapparates 4 ist die Primärseite eines Luftvorwärmers 16 angeschlossen, dessen Sekundärseite über ein Gebläse 17 mit der Feuerung 12 des Heizapparates verbunden ist.

Der Austritt der Turbine 7 ist über die Primärseite des Rekuperators 3 mit einem Abluftkessel 20 verbunden, der — in Richtung der Luftströmung gesehen — eine erste Heizfläche 22 eines Heisswasserkreislaufs 23, eine zweite Heizfläche 25 eines Warmwasserkreislaufs 26, eine dritte Heizfläche 28 eines weiteren Warmwasserkreislaufs 29 und schliesslich eine vierte Heizfläche 32 eines Schwimmbadheizkreislaufs 33 aufweist.

Die vier Kreisläufe 23, 26, 29 und 33 führen Heisswasser zu einem benachbarten Städtchen 50, Warmwasser zu einer Universität 40, Warmwasser tieferer Temperatur zu einer Wäscherei 52 bzw. Warmwasser zu einem nicht gezeichneten Schwimmbad. In den Rücklaufleitungen der vier Kreisläufe sind jeweils Umwälzpumpen 55 angeordnet.

Der Austritt 35 des Abluftkessels 20 ist über einen Verteilschieber 37 mit einer dem ersten Ast einer Warmluftferheizung angehörenden Warmluftleitung 38 verbunden, die zu einem nahen Universitätskomplex 40 führt. Die Warmluftleitung 38 ist im Gebäudekomplex mit einem Feinverteilsystem 41 verbunden.

Zwischen der vierten Heizfläche 32 und der dritten Heizfläche 28 ist der Abluftkessel 20 durch eine Leitung 58 angezapft, die einen zweiten Ast des Grobverteilsystems bildet. Die Leitung 58 führt über einen statischen Mischer 60 zu einem Feinverteilsystem 62 einer Fabrikliegenschaft 65. Dem Feinverteilsystem 62 gegenüber ist ein Sammler 67 angeordnet, der zum Eingang der Primärseite eines Abluftrekuperators 68 führt. Der sekundärseitige Austritt des Abluftrekuperators 68 ist über eine Leitung 71 mit Gebläse 70 mit dem Eintritt des Mischers 60 verbunden. Die Warmluftzufuhr zur Fabrikliegenschaft 65 wird je nach dem Wärmebedarf durch ein in der Leitung 58 angeordnetes Drosselorgan 72 beeinflusst, und gleichzeitig wird auch die Durchsatzmenge des Gebläses 70 so eingestellt, dass sich angenehme Temperaturverhältnisse ergeben. Für den Fall, dass bei Benützung einer festen Anzapfstelle des Abluftkessels 20 der Regelbereich nicht genügen sollte, kann die Leitung 58 auch an zwei oder mehr Stellen des Abluftkessels angeschlossen sein, wobei der Luftbezugsort innerhalb dieser Stellen verschoben werden kann.

Im vorliegenden Beispiel bezieht die Wäscherei 52 Wärme zu besonders günstigem Tarif mit der Bedingung, dass die Wärmeabgabe reduziert oder unterbrochen werden kann, wenn die Fabrikliegenschaft 65 mehr Wärme benötigt. Wird dementsprechend die zur dritten Heizfläche 28 führende Umwälzpumpe 55 ausgeschaltet, so steigt die Temperatur in der Leitung 58.

Im Bereich zwischen den Heizflächen 28 und 25 zweigt vom Abluftkessel 20 ein dritter Ast des Grobverteilsystems ab, der durch eine Leitung 78 gebildet ist und zu einem Weiler 80 führt. Die Mischung von Frischluft geschieht hier zum Teil erst in den kleinen Wohneinheiten, vor allem durch Ejektoren, die Raumluft und zu kleinem Teil Frischluft ansaugen. Je nach Bedarf werden in nicht dargestellten Zweigleitungen der Leitung 78 Gebläse installiert, welche den für den Betrieb der Ejektoren nötigen Druck erzeugen.

Im Rücklauf des ersten Kreislaufes 23 ist ein Dreiwegschieber 82 vorgesehen, der gestattet, den Kreislauf 23 vollständig oder teilweise über einen im Luftstrom zwischen dem Verdichter 2 und dem Rekuperator 3 angeordneten Kühler 84 zu führen.

Durch die Rückkühlung der verdichteten Luft im Kühler 84 wird Luftfeuchte auskondensiert, die als Kondensat über den Stutzen 85 aus dem Kühler 84 abgelassen werden kann. Der Dreiwegschieber 82 wird von einem stromunterhalb des Mischers 60 angeordneten Feuchtefühler 61 in dem Sinn beeinflusst, daß bei steigender Feuchte $\varphi$ ein zunehmender Teil des im Kreislauf 23 zirkulierenden Heisswassers über den Kühler 84 geführt wird.

### Ansprüche

1. Warmluftfernheizung für Gebäude (40, 65), wobei ein Luftverdichter (2) über einen beheizbaren Oberflächenwärmeübertrager (5) mit einer mechanische Arbeit abgebenden Heissluftturbine (7) verbunden ist, die an ein Grobverteilsystem (38, 58, 78) für Warmluft angeschlossen ist, dadurch gekennzeichnet, dass der Verdichter (2) einen zur freien Atmosphäre offenen Luftansaugstutzen aufweist, dass zwischen dem Verdichter (2) und dem Oberflächenwärmeübertrager (5) die Sekundärseite eines Rekuperators (3) eingeschaltet ist, der primärseitig zwischen den Austrittsstutzen der Heissluftturbine (7) und das Grobverteilsystem (38, 58, 78) eingeschaltet ist, und dass das Grobverteilsystem (38, 58, 78) an innerhalb der zu beheizenden Gebäude (40, 65) befindliche Feinverteilsysteme (41, 62) angeschlossen ist, die in den Gebäuden offen enden.

2. Warmluftfernheizung nach Anspruch 1, dadurch gekennzeichnet, dass in mindestens einem Ast (58) des Grobverteilsystems eine Frischluftzuleitung (71) einmündet.

3. Warmluftfernheizung nach Anspruch 2, dadurch gekennzeichnet, dass in die Frischluftzuleitung (71) zum Ast (58) des Grobverteilsystems die Sekundärseite eines Abluftrekuperators (68) eingeschaltet ist, durch den pirmärseitig Gebäudeabluft strömt.

4. Warmluftfernheizung nach einem der Ansprüche 2 und 3, dadurch gekennzeichnet, dass stromunterhalb der Einmündung der Frischluftzuleitung (71) in den Ast (58) des Grobverteilsystems und noch vor der Feinverteilung in Gebäude ein statischer Mischer (60) zur Homogenisierung der Temperatur des Luftstromes vorgesehen ist.

5. Warmluftfernheizung nach einem der Ansprüche 1 bis 4, dadurch gekennzeichnet, dass in einem Ast (38) zu einem mit geringerem Aufwand mit Heissluft versorgbarem Gebäude (40) eine den Warmluftstrom zusätzlich kühlende Wärmeübertragungsfläche (32) vorgesehen ist.

6. Warmluftfernheizung nach einem der Ansprüche 1 bis 5, mit den Luftstrom kühlenden Wärmeübertragungsflächen (32, 28, 25, 22), dadurch gekennzeichnet, dass Mittel vorhanden sind, um aussen- oder raumtemperaturabhängig einzelne oder alle dieser Wärmeübertragungsflächen (32, 28, 25, 22) ein- oder auszuschalten.

7. Warmluftfernheizung nach einem der Ansprüche 1 bis 6, dadurch gekennzeichnet, dass in der Druckluft-Verbindungsleitung zwischen dem Verdichter (2) und dem Rekuperator (3) ein regelbarer Kühler (84) angeordnet ist, durch den die Feuchte ($\varphi$) der Abluft beeinflusst werden kann.

### Claims

1. Hot-air district heating for buildings (40, 65), in which an air compressor (2) is connected via a heatable surface heat-exchanger (5) to a hot-air turbine (7) performing mechanical work and connected to a hot-air coarse distributing system (38, 58, 78), characterised in that the compressor (2) has an air inlet open to free atmosphere ; the secondary side of a recuperator (3) is connected between the compressor (2) and the surface heat exchanger (5), the primary side of the recuperator being connected between the outlet of the hot-air turbine (7) and the coarse distribution system (38, 58, 78) ; and the coarse distribution system (38, 58, 78) is connected to fine distribution systems (41, 62) situated inside the buildings (40, 65) requiring to be heated, said finedistribution systems terminating with open ends in said buildings.

2. A hot-air district heating system according to claim 1, characterised in that a fresh-air supply line (71) leads into at least one branch (58) of the coarse-distribution system.

3. A hot-air district heating system according to claim 2, characterised in that the fresh-air supply line (71) to the coarse-distribution system branch (58) contains the secondary side of a waste-air recuperator (68), through the primary side of which waste air from the buildings flows.

4. A hot-air district heating system according to claim 2 or 3, characterised in that a static mixer (60) for homogenizing the air stream temperature is provided downstream of the entry of the fresh air supply line (71) to the coarse-distributing system branch (58) and before fine-distribution in the building.

5. A hot-air district heating system according to any one of claims 1 to 4, characterised in that a branch (38) leading to a building (40) adapted to be supplied with hot-air at lower cost contains a heat exchange surface (32) which additionally cools the hot-air stream.

6. A hot-air district heating system according to any one of claims 1 to 5, having heat exchange surfaces (32, 28, 25, 22) which cool the airstream, characterised in that means are provided for connecting or disconnecting individual heat exchange surfaces or all said heat exchange surfaces (32, 28, 25, 22) in dependence on the external or room temperature.

7. A hot-air district heating system according to any one of claims 1 to 6, characterised in that the compressed air connecting line between the compressor (2) and the recuperator (3) contains an adjustable cooler (84), by means of which the humidity ($\varphi$) of the waste air can be controlled.

## Revendications

1. Chauffage à distance par de l'air chaud pour bâtiments (40, 65), dans lequel un compresseur d'air (2) est relié, par l'intermédiaire d'un transmetteur (5) de chaleur superficielle pouvant être chauffé, à une turbine (7) à air chaud délivrant un travail mécanique et raccordée à un système (38, 58, 78) de répartition grossière d'air chaud, caractérisé par le fait que le compresseur (2) comporte un manchon d'aspiration d'air ouvert à l'atmosphère libre, par le fait que, entre le compresseur (2) et le transmetteur (5) de chaleur superficielle, est intercalé le côté secondaire d'un récupérateur (3) dont le côté primaire est intercalé entre le manchon de sortie de la turbine (7) à air chaud et le système de répartition grossière (38, 58, 78), et par le fait que le système de répartition grossière (38, 58, 78) est raccordé à des systèmes de répartition fine (41, 62) qui, situés à l'intérieur des bâtiments (40, 65) devant être chauffés, débouchent dans ces bâtiments.

2. Chauffage à distance par de l'air chaud selon la revendication 1, caractérisé par le fait qu'un conduit (71) d'admission d'air frais débouche dans au moins une ramification (58) du système de répartition grossière.

3. Chauffage à distance par de l'air chaud selon la revendication 2, caractérisé par le fait que, dans le conduit (71) d'admission d'air frais gagnant la ramification (58) du système de répartition grossière, est intercalé le côté secondaire d'un récupérateur (68) d'air évacué dont le côté primaire est parcouru par de l'air évacué provenant des bâtiments.

4. Chauffage à distance par de l'air chaud selon l'une des revendications 2 et 3, caractérisé par le fait que, en aval de l'embouchure du conduit (71) d'admission d'air frais dans la ramification (58) du système de répartition grossière et avant la répartition fine dans le bâtiment, un mélangeur statique (60) est prévu pour l'homogénéisation de la température du courant d'air.

5. Chauffage à distance par de l'air chaud selon l'une des revendications 1 à 4, caractérisé par le fait qu'il est prévu, dans une ramification (38) vers un bâtiment (40) pouvant être alimenté sans grande difficulté par de l'air chaud, une surface (32) de transmission de chaleur qui assure un refroidissement supplémentaire du courant d'air chaud.

6. Chauffage à distance par de l'air chaud selon l'une des revendications 1 à 5, comportant des surfaces (32, 28, 25, 22) de transmission de chaleur refroidissant le courant d'air, caractérisé par le fait qu'il présente des moyens pour mettre en service ou hors service, en fonction de la température externe ou de la température ambiante, individuellement certaines de ces surfaces (32, 28, 25, 22) de transmission de chaleur, ou bien toutes lesdites surfaces.

7. Chauffage à distance par de l'air chaud selon l'une des revendications 1 à 6, caractérisé par le fait que, dans le conduit de jonction à air comprimé entre le compresseur (2) et le récupérateur (3), se trouve un refroidisseur réglable (84) grâce auquel l'humidité ($\varphi$) de l'air évacué peut être influencée.